# EUROPÄISCHE PATENTANMELDUNG

(11) **EP 4 117 106 A1**
(43) Veröffentlichungstag der Anmeldung: **11.01.2023**
(21) Anmeldenummer: 21184825.4
(22) Anmeldetag: 09.07.2021
(51) Int. Cl.: H01M 50/545, H01M 50/559, H01M 50/566, H01M 50/528, H01M 50/102, H01M 50/107, H01M 10/04, H01M 50/133, H01M 10/643

(54) **ELEKTROCHEMISCHE ZELLE MIT VERLUSTARMEM ANSCHLUSS ZWISCHEN ELEKTRODE UND GEHÄUSE**

(71) Anmelder: Zentrum für Sonnenenergie- und Wasserstoff-Forschung Baden-Württemberg Gemeinnützige Stiftung, 70563 Stuttgart (DE)
(72) Erfinder: BRÄNDLE, Daniel, 73117 Wangen (DE); FECHTER, Anton, 89075 Ulm (DE); SCURTU, Rares-George, 89134 Blaustein (DE)
(74) Vertreter: Ter Meer Steinmeister & Partner

(57) **Zusammenfassung**

Die Erfindung betrifft eine elektrochemische Zelle, die ein Gehäuse umfasst, in dem unter anderem ein Elektrodenwickel mit einer Kathoden- und einer Anodenlage enthalten ist, wobei sowohl die Kathoden- als auch die Anodenlage jeweils einen unbeschichteten Anteil aufweist, und mindestens ein unbeschichteter Anteil mit mindestens einer Sicke verschweißt ist, die in eine Gehäusewand eingebracht ist. Des Weiteren ist die Erfindung auf ein Verfahren zur Herstellung einer solchen elektrochemischen Zelle gerichtet.

## Beschreibung

### Gebiet der Erfindung

Die vorliegende Erfindung ist auf eine elektrochemische Zelle gerichtet, die ein Gehäuse umfasst, in dem unter anderem ein Elektrodenwickel mit einer Kathoden- und einer Anodenlage enthalten ist, wobei sowohl die Kathoden- als auch die Anodenlage jeweils einen unbeschichteten Anteil aufweist, und mindestens ein unbeschichteter Anteil mit mindestens einer Sicke verschweißt ist, die in eine Gehäusewand eingebracht sind. Des Weiteren ist die Erfindung auf ein Verfahren zur Herstellung einer solchen elektrochemischen Zelle gerichtet.

### Technischer Hintergrund und Stand der Technik

Energiewende, E-Mobilität und Digitalisierung sorgen schon heute für eine sehr hohe Nachfrage nach Batteriezellen (elektrochemischen Zellen). Experten erwarten jedoch, dass der Bedarf an Batteriezellen in den nächsten 5-10 Jahren noch um ein Vielfaches steigen wird.

Klar ist bereits, dass nicht jede Batteriezelle für jede beliebige Anwendung geeignet ist. Eine universelle Batteriezelle gibt es dementsprechend nicht. Somit sind auch die Ansprüche an die Weiterentwicklung von Zelltyp zu Zelltyp verschieden. Zwei Anforderungen werden jedoch an alle Batteriezellen gestellt: Sie sollen möglichst geringe Verlustleistungen besitzen und ein gutes Wärmemanagement aufweisen.

In diesem Zusammenhang stellt beispielsweise die US 2020/0144676 A1 eine gerollte Zelle (nach dem sogenannten "Jelly Roll"-Prinzip) mit einem nach eigenen Angaben geringen inneren Widerstand zur Verfügung. Hierfür wird ein Zellaufbau gewählt, in dem eine der zwei Laschen (engl. "tabs"), welche normalerweise für den elektrischen Anschluss der Elektroden an jeweils einen äußeren Pol sorgen, durch ein alternatives Verbindungsprinzip ersetzt ist. Bei diesem alternativen Verbindungsprinzip wird eine Elektrodenfolie verwendet, die an einem Rand einen elektrisch leitenden Abschnitt aufweist. Dieser Abschnitt wird mit einer Kollektorplatte verbunden, welche wiederum in elektrischem Kontakt mit dem Batteriegehäuse steht. Durch die nun durchgängige und nicht nur zentrale elektrische Anbindung der Elektrodenfolie an die Kollektorplatte durch eine Lasche wird angenommen, dass die Ladungsträger insgesamt eine geringere Strecke zurücklegen müssen und dass somit der innere Widerstand sinkt.

Ähnlich wie die US 2020/0144676 A1 beschreibt auch die US 2005/0277019 A1 eine elektrochemische Zelle, bei der ein spezieller Anschluss des Elektrodenwickels an das Gehäuse erlaubt, die über alle Wicklungen gemittelte Ladungstransportstrecke im Vergleich zu herkömmlichen Zelltypen mit Anschlusslaschen zu verkürzen. Hier umfassen die Elektrodenfolien Fortsätze, die senkrecht zu der Richtung ihrer hauptsächlichen Ausdehnung verlaufen und die gewissermaßen als Gerüst für die Aufbringung eines elektrisch leitfähigen Führungsdrahts dienen. Nach dem Rollen der mit einem Führungsdraht bestückten Elektrodenfolien und der Separatorfolie zu einem Elektrodenwickel wird die Form des Elektrodenwickels an beiden Enden durch Schweißnähte fixiert. Die Anode wird dann an den Schweißnähten mit der flachen und nicht weiter strukturierten Gehäusewand der Zelle verbunden. Die Schweißnähte auf Kathodenseite werden an das im Inneren der Zelle liegende Ende eines Pols angeschlossen.

Die US 2009/0029240 A1 betrifft eine gerollte elektrochemische Zelle mit einem klassischen Mehrfachanschluss (engl. "Multitab"-Anschluss) einer Elektrodenfolie an einen Kollektor. Der US 2009/0029240 A1 zufolge kann es bei solchen Mehrfachanschlüssen trotz des zwischen den Elektroden angeordneten Separators zu Problemen mit Kurzschlüssen kommen. Es wird geschildert, dass sich die Elektrodenanschlüsse beispielsweise durch äußere Einflüsse verbiegen und dadurch ihre ursprüngliche Position und Ausrichtung in der Zelle verlassen können. Dabei besteht die Gefahr, dass sie in Kontakt mit der entgegengesetzt geladenen Elektrode kommen. Um dies zu verhindern, wird empfohlen, einen speziell geformten und in das Gehäuse eingepassten Anschlussisolator zu verwenden. Dieser soll mindestens einen Schlitz aufweisen, durch den mindestens einer der Anschlüsse geführt und dadurch so arretiert werden kann, dass er von den anderen Anschlüssen elektrisch abgeschirmt ist.

### Aufgabe der Erfindung

Ausgehend von dem oben genannten Stand der Technik hat sich die vorliegende Erfindung zur Aufgabe gemacht, eine elektrochemische Zelle bereitzustellen, in welcher der Innenwiderstand weiter minimiert ist und die dadurch eine verbesserte Energieeffizienz aufweist. Eine weitere Aufgabe war es, eine Zelle zu entwickeln, die in einem unaufwändigen Herstellungsprozess mit geringem Materialaufwand hergestellt werden kann. Ebenso sollte ein Verfahren zur Herstellung solcher Zellen angegeben werden.

### Zusammenfassung der Erfindung

Diese Aufgaben werden durch den Gegenstand der unabhängigen Ansprüche gelöst. Weitere vorteilhafte Ausführungsformen lassen sich aus den abhängigen Ansprüchen ableiten.

Die erfindungsgemäße elektrochemische Zelle umfasst ein Zellgehäuse sowie, darin enthalten, eine Elektrolytflüssigkeit und ein Elektrodenwickel. Das Zellgehäuse weist eine Gehäusewand auf, in der sich zumindest bereichsweise mindestens eine Sicke befindet. Der Elektrodenwickel enthält mindestens eine Anodenlage, mindestens eine Kathodenlage und mindestens eine zwischen der Anodenlage und der Kathodenlage angeordnete Separatormembran. Des Weiteren umfassen sowohl die Anodenlage als auch die Kathodenlage jeweils einen mit einem Aktivmaterial beschichteten Anteil und einen unbeschichteten, elektrisch leitenden Anteil. Von den unbeschichteten Anteilen ist außerdem mindestens ein unbeschichteter Anteil mit der mindestens einen Sicke der Gehäusewand verschweißt.

Unter einer "Sicke" kann eine Auswölbung verstanden werden. Ebenso kann eine "Sicke" als Prägung bezeichnet werden. Im Rahmen der vorliegenden Erfindung kann eine Sicke auch eine Noppe sein. Insbesondere kann eine Sicke sich auf eine Auswölbung einer ansonsten im Wesentlichen planaren Fläche bzw. Schicht beziehen. In einer Ausführungsform ist eine Sicke durch Verformung, insbesondere Prägung, einer als Schicht mit im Wesentlichen einheitlicher Dicke ausgestalteten Gehäusewand erhalten worden. In diesem Fall weist die Gehäusewand an einer der Sicke korrespondierenden Position auf der gegenüberliegenden Seite eine Vertiefung auf. Eine Sicke kann eine punktförmige, eine rinnenförmige oder eine linienförmige Erhebung sein. Bevorzugt weist die Sicke keine scharfen Kanten auf. Stattdessen zeichnet sich die Sicke bevorzugt durch Rundungen oder abgerundete Ecken aus.

Hinsichtlich der chemischen Beschaffenheit der Elektrolytflüssigkeit gibt es keine Beschränkungen. Bevorzugt ist aber, wenn eine LiPF₆-haltige Lösung als Elektrolytflüssigkeit verwendet wird.

Der Aufbau, insbesondere die Verknüpfung eines unbeschichteten Anteils einer Elektrodenlage mit der Sicke in der Gehäusewand erlaubt eine weitere Reduzierung des elektrischen Widerstands beim Ladungsträgertransport und erhöht die Energieeffizienz der Zelle. Ohne an den nachfolgenden Erklärungsversuch gebunden sein zu wollen, wird angenommen, dass einerseits das Weglassen eines zusätzlichen Bauteils, nämlich des Kollektors zwischen Gehäusewand und Elektrodenwickel, einen positiven Einfluss auf den inneren elektrischen Widerstand der Zelle hat. Dies ist der Tatsache geschuldet, dass Kontakte zwischen zwei Bauteilen nur selten vollkommen fehlerlos sind und dass der elektrische Widerstand an Grenzflächen zwischen zwei Komponenten besonders hoch ist. Andererseits ist das Setzen der Schweißpunkte auf der Gehäusewand zur Verbindung mit den unbeschichteten Anteilen der Elektrodenlagen um ein Vielfaches einfacher und präziserer, wenn mindestens eine Sicke vorhanden ist, als wenn die Gehäusewand vollkommen planar oder einheitlich gekrümmt ist. Zuletzt wird auch davon ausgegangen, dass der Widerstand sinkt, weil die Zelle insgesamt kompakter ist. Zwar ist die Volumenreduktion, die durch das neue Zelldesign erreicht werden kann, gering, jedoch bedeutet selbst eine geringe Volumenreduktion einen enormen Vorteil in Anbetracht der Energiemenge, die aktuell schon mit Hilfe von Batterien gespeichert wird und die in den nächsten Jahren noch deutlich wachsen wird.

Aus dem reduzierten bzw. geringen elektrischen Widerstand ergeben sich weitere Vorteile, insbesondere eine hervorragende spezifische Leistung bzw. Leistungsfähigkeit der Zelle. Des Weiteren ist der geringe elektrische Widerstand mit einer sehr guten Ladefähigkeit verbunden, die es erlaubt, die Zelle innerhalb sehr kurzer Zeit wieder annähernd vollständig aufzuladen. Zudem trägt der geringe Widerstand auch zu einer erhöhten Lebensdauer der Zelle bei.

Daneben führt der reduzierte elektrische Widerstand der erfindungsgemäßen Zelle auch zu einer homogeneren Wärmeverteilung und einer homogeneren Stromdichte. Auch die Wärmeabfuhr in der Zelle ist effizienter, was sich beispielsweise in einer besseren Kühlfähigkeit äußert. Die Temperatur an der Oberfläche der Zelle ist somit auf einem niedrigen und einheitlichen Niveau.

Eine weitere vorteilhafte Eigenschaft der erfindungsgemäßen elektrochemischen Zelle ergibt sich auch aus dem Vorhandensein von mindestens einer Sicke in der Gehäusewand. Durch die Sicke kommt es zu einer Versteifung der Gehäusewand. Dies ermöglicht es, die Gehäusewand dünner auszuführen, ohne dass dies auf Kosten der mechanischen Stabilität geht.

Zudem kann im Vergleich zu herkömmlichen elektrochemischen Zellen, bei denen die unbeschichteten Anteile jeweils mit einer zusätzlichen Kollektorplatte verschweißt sind, Material eingespart werden. Auf mindestens eine von zwei in herkömmlichen Zellen verwendeten Kollektorplatten kann verzichtet werden.

In einer bevorzugten Ausführungsform ist die elektrochemische Zelle eine Rundzelle. In diesem Zellformat treten die Vorteile des erfindungsgemäßen Zellaufbaus am deutlichsten zu Tage. Außerdem ist eine Rundzelle für eine Vielzahl von Anwendungsfeldern geeignet.

Dementsprechend weist das Zellgehäuse der erfindungsgemäßen Zellen auch bevorzugt die Form eines Zylinders auf. Die mindestens eine Sicke befindet sich vorteilhafterweise ausschließlich in einem Bereich der Gehäusewand, der eine Grundfläche des Zylinders bildet. Im Umkehrschluss bedeutet dies, dass die Teile der Gehäusewand, die der Mantelfläche des Zylinders entsprechen, bevorzugt frei von Sicken sind.

In einer Variante weist die Gehäusewand zumindest in dem Bereich, der einer Grundfläche des Zylinders entspricht, eine Wandstärke von maximal 2,0 mm, bevorzugt von maximal 1,5 mm auf. Es ist insbesondere bevorzugt, wenn die Gehäusewand zumindest in dem Bereich, der einer Grundfläche des Zylinders entspricht, eine Wandstärke von maximal 0,3 mm aufweist. Es ist besonders bevorzugt, wenn die Gehäusewand noch dünner ist und eine Wandstärke von maximal 0,2 mm aufweist. Die Wandstärke ist dabei der Wert, der durch Mittelwertbildung von mindestens fünf Einzelmessungen, bevorzugt von mindestens zehn Einzelmessungen an unterschiedlichen Positionen erhalten wurde.

Die Sicke kann in verschiedenen Arten auf der Gehäusewand angeordnet sein. Wenn sich mehrere Sicken in der Gehäusewand befinden, sind diese bevorzugt kreisrund ausgebildet und voneinander durch nicht geprägte Abschnitte vollständig getrennt. Sie können dann ebenfalls rillen- bzw. rinnenförmig ausgebildet sein und sich bevorzugt an einer Stelle überschneiden, zum Beispiel dem Mittelpunkt der Fläche der Gehäusewand. Sie können ebenso rillen- bzw. rinnenförmig sein und jeweils in sich geschlossene Kreise ausbilden, die insgesamt konzentrisch angeordnet sind. Wenn nur eine Sicke in der Gehäusewand vorhanden ist, ist die Sicke bevorzugt rillenförmig ausgebildet und verläuft spiralförmig.

Die mindestens eine Sicke weist bevorzugt eine Tiefe von mehr als 0,1 mm, besonders bevorzugt eine (durchschnittliche) Tiefe von mehr als 0,1 und weniger als 2,0 mm auf. Insbesondere weist die mindestens eine Sicke eine (durchschnittliche) Tiefe in einem Bereich zwischen 0,15 bis 1,5 mm auf. Vorzugsweise hat die mindestens eine Sicke einen (durchschnittlichen) Durchmesser von 1,0 bis 4,0 mm, insbesondere von 1,0 bis 3,0 mm.

Der beschichtete Anteil hat bevorzugt eine rechteckige Form. Eine Kantenlänge des beschichteten Anteils liegt bevorzugt in dem Bereich von 50 bis 150 mm. Besonders bevorzugt ist die Länge der einen Kante im Bereich von 55 bis 65 mm.

Der unbeschichtete Anteil der Anodenlage und/oder der Kathodenlage umfasst bevorzugt eine Vielzahl von Laschen (engl. "Multitabs"). Die Laschen weisen bevorzugt alle im Wesentlichen die gleichen Abmessungen auf, z.B. weisen sie bevorzugt eine Länge von 4 mm auf. Des Weiteren sind die Laschen bevorzugt voneinander beabstandet. Der Abstand zwischen zwei benachbarten Laschen kann von 2 bis 500% ihrer Länge betragen. Bevorzugt beträgt der Abstand zwischen zwei benachbarten Laschen zwischen 5 und 500% ihrer Länge oder sogar zwischen 20 und 500% ihrer Länge.

In einer Ausführungsform der Erfindung liegen zumindest einige der Laschen abgeknickt oder gebogen vor, insbesondere so, dass zwischen einigen der Laschen ein Kontakt entsteht.

Bevorzugt umfasst die Anodenlage eine Aluminiumfolie oder besteht daraus. Die Kathodenlage umfasst bevorzugt eine Kupferfolie oder besteht daraus. Sowohl die Aluminiumfolie als auch die Kupferfolie weisen vorzugsweise eine Dicke von 5 bis 25 µm auf.

Das Aktivmaterial kann aus Graphit oder einem Material aus der Gruppe bestehend aus Lithiumkobaltoxid (LiCoO₂), Lithiummanganoxid (LiMnO₂), Lithiumeisenphosphat (LiFePO₄), Lithium-Nickel-Mangan-Kobalt Oxid (NMC), Lithium-Nickel-Kobalt-Aluminium Oxid (NCA) und Mischungen hiervon ausgewählt werden.

Vorzugsweise ist der unbeschichtete Anteil der ersten Elektrodenlage, z.B. der Anodenlage, an einem ersten Ende der Längsachse des Elektrodenwickels angeordnet und weist bevorzugt in Richtung eines ersten Endes der elektrochemischen Zelle. Der unbeschichtete Anteil der zweiten Elektrodenlage (Kathodenlage) ist dann bevorzugt an dem anderen Ende, das dem ersten Ende gegenüberliegt, angeordnet. Diese räumliche Trennung entspricht der üblichen Trennung der Pole bei Rundzellenbatterien. Darüber hinaus senkt diese Orientierung auch das Risiko für das Auftreten von Kurzschlüssen.

Bevorzugt ist entweder der unbeschichtete Anteil der Anodenlage oder der unbeschichtete Anteil der Kathodenlage mit der mindestens einen Sicke der Gehäusewand verschweißt. Der jeweils andere unbeschichtete Anteil ist dann mit einer Kollektorplatte verschweißt. Dies erlaubt es, auf der Seite, auf der der unbeschichtete Anteil mit einer Kollektorplatte verschweißt ist, die üblichen Sicherheitskomponenten, z.B. Sicherheitsventile, zu installieren.

Ein weiterer Aspekt der vorliegenden Erfindung besteht in der Bereitstellung eines Verfahrens zur Herstellung einer elektrochemischen Zelle, bei dem a) eine Anordnung von mindestens einer Anodenlage, mindestens einer Kathodenlage und mindestens einer zwischen der Anodenlage und der Kathodenlage angeordneten Separatormembran zu einem Elektrodenwickel gerollt wird, wobei sowohl die Anodenlage als auch die Kathodenlage jeweils einen mit einem Aktivmaterial beschichteten Anteil und einen unbeschichteten, elektrisch leitenden Anteil umfassen; b) der Elektrodenwickel in ein Zellgehäuse eingeführt wird, in dessen Gehäusewand sich zumindest bereichsweise mindestens eine Sicke befindet; c) mindestens ein unbeschichteter Anteil mit der Sicke der Gehäusewand in einem Laserschweißprozess verbunden wird; und d) eine Elektrolytflüssigkeit in das Zellgehäuses gefüllt wird, bevor das Zellgehäuse verschlossen wird.

Zum Verbinden von mindestens einem unbeschichteten Anteil einer Elektrodenlage mit der mindestens einen Sicke der Gehäusewand in dem Laserschweißprozess c) wird der Elektrodenwickel, der in das Zellgehäuse eingeführt wurde, bevorzugt gegen die Wand des Gehäusebodens gepresst. Dann sollte durch Laserschweißen mindestens ein Schweißpunkt zwischen dem unbeschichteten Anteil und der Sicke hergestellt werden. Ein solcher Schweißpunkt kann beispielsweise mit Hilfe eines Nd:YAG-Lasers der Firma Rofin präpariert werden (Typ: "Starweld Select" - "Microweld"). Bei Einsatz dieses Lasers kann bei einer durchschnittlichen Laserleistung von 0,5 bis 1,5 kW, insbesondere 1,1 kW, und einer durchschnittlichen Pulsdauer von 2,0 bis 10,0 ms, insbesondere 5,7 ms, ein stabiler Schweißpunkt zwischen dem unbeschichteten Anteil und der mindestens einen Sicke erzeugt werden. Zudem ist bevorzugt, wenn der Schweißvorgang unter Schutzgas (als Schutzgasschweißvorgang) abläuft. Als Schutzgas kann beispielsweise Argon dienen.

Der Schritt zur Herstellung eines Schweißpunktes, der einen Schritt in dem Laserschweißprozess darstellt, kann beliebig oft wiederholt werden. Auch die Gesamtanzahl der einzelnen Schweißpunkte ist dementsprechend variabel. Eine hohe Anzahl an Schweißpunkten ist jedoch mit Blick auf den gewünschten geringen elektrischen Widerstand der fertigen Zelle zu bevorzugen.

Aus verfahrenstechnischer Sicht kann der Laserschweißprozess automatisiert durchgeführt werden und zum Beispiel mit Hilfe eines CNC-Programms gesteuert werden.

Wenn der unbeschichtete Anteil in Schritt a) ein durchgängiger Streifen mit konstanter Breite am Rand der Kathodenlage oder der Anodenlage ist, können noch Vertiefungen in den unbeschichteten Anteil eingebracht werden. So entsteht eine Vielzahl von Laschen, bevor der Elektrodenwickel in das Zellgehäuse eingeführt wird. Hierbei können die Vertiefungen mit Hilfe einer Sickenprägemaschine erzeugt werden.

### Beschreibung der bevorzugten Ausführungsformen

Bevorzugte Ausführungsformen der Erfindung werden unter Bezugnahme auf die nachfolgenden Figuren und Versuche näher erläutert, ohne die Erfindung darauf beschränken zu wollen.
Figur 1 zeigt eine erste Variante einer Verbindung zwischen einem Elektrodenwickel und einem Zellgehäuse nach dem Stand der Technik und zwar in einem Zustand, in dem Kollektorplatte und Gehäusewand durch einen Spalt getrennt sind.
Figur 2 zeigt eine zweite Variante einer Verbindung zwischen Elektrodenwickel und Zellgehäuse nach dem Stand der Technik, welche die Ausbildung eines Spalts zwischen Kollektorplatte und Gehäusewand zu vermeiden sucht.
Figur 3 zeigt schematische Ansichten einer erfindungsgemäßen Zelle nach einer ersten Ausführungsform.
Figur 4 zeigt schematische Ansichten einer erfindungsgemäßen Zelle nach einer zweiten Ausführungsform.
Figur 5 zeigt schematische Ansichten einer erfindungsgemäßen Zelle nach einer dritten Ausführungsform.
Figur 6 zeigt, wie die Tiefe T und die Breite B einer Sicke definiert ist und gemessen werden kann.
Figur 7 zeigt das Vorgehen bei der Herstellung eines Elektrodenwickels aus Elektrodenfolien mit durchgängigem Blankrand.
Figur 8 zeigt das Vorgehen bei der Herstellung eines Elektrodenwickels aus Elektrodenfolien mit einer Vielzahl von Laschen (Multitabs) an den Folienrändern.
Figur 9 zeigt die Verschweißung eines Elektrodenwickels mit einer Kollektorplatte nach dem Stand der Technik und die anschließende Positionierung der so hergestellten Anordnung aus Elektrodenwickel und Kollektorplatte im Zellgehäuse (beides im Querschnitt).
Figur 10 zeigt einen Querschnitt einer elektrochemischen Zelle nach einer Ausführungsform der vorliegenden Erfindung.
Figur 11 ist eine fotographische Aufnahme der Bestandteile einer elektrochemischen Zelle nach einer Ausführungsform der vorliegenden Erfindung.
Figur 12 ist eine fotographische Aufnahme einer oberen Seite eines Elektrodenwickels, bei dem eine Vielzahl an Laschen in Richtung eines Mittelpunktes hin abgeknickt oder gebogen wurden.
Figur 13 beinhaltet zwei fotographische Aufnahmen einer erfindungsgemäßen Zelle, bei der die Sicken der Gehäusewand, in denen die Gehäusewand mit dem inneren Elektrodenwickel verschweißt sind, gut zu erkennen sind.
Figur 14 zeigt schematisch das Herstellungsverfahren einer gewöhnlichen elektrochemischen Zelle.
Figur 15 zeigt die Entladefähigkeit einer erfindungsgemäßen Zelle im Vergleich zu der Entladefähigkeit zweier herkömmlicher Zellen bei fünf verschiedenen Entladeströmen.

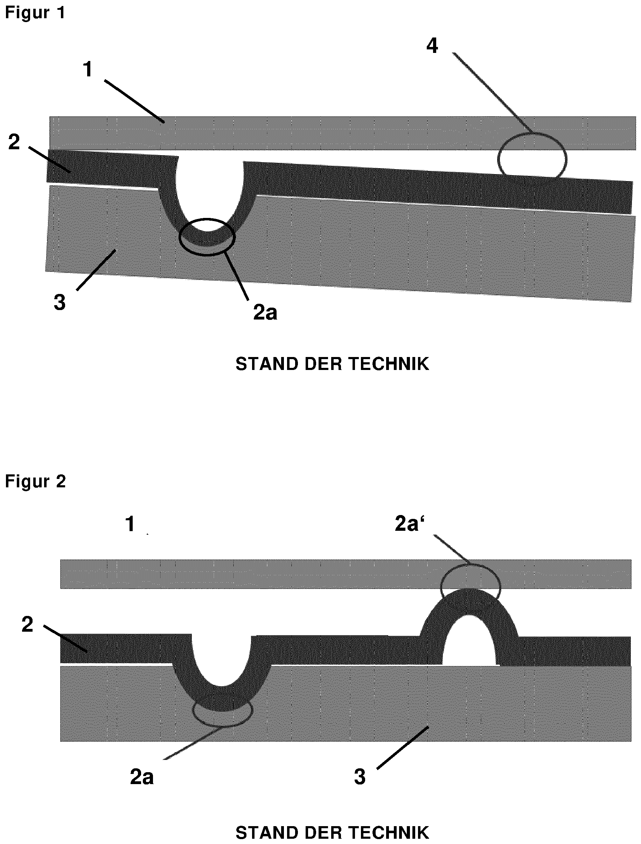

In Fig. 1 ist ein Ausschnitt einer elektrochemischen Zelle nach dem Stand der Technik zu sehen. Die Zelle umfasst ein Gehäuse 1, einen Elektrodenwickel 3 und eine Kollektorplatte 2. Sowohl die Kollektorplatte 2 als auch die Oberfläche des Elektrodenwickels 3 weist eine Sickenprägung in einer Richtung auf. In dieser Sickenprägung sind Kollektorplatte und Elektrodenwickel üblicherweise in einem Schweißpunkt 2a miteinander verbunden. Im Herstellungsprozess kommt es jedoch bei einer solchen Ausführung häufig dazu, dass die Kollektorplatte 2 verrutscht. Sie liegt dann nicht mehr an der Wand des Gehäuses 1 an. Wird dann versucht, an einer solchen Stelle einen weiteren Schweißpunkt zu setzen, wird die Energie des Laserstrahls allein vom Gehäuse absorbiert. Die Zelle wird dadurch stark beschädigt und ist nicht funktionsfähig.

Um solche Szenarien zu vermeiden, sieht eine andere, bereits bekannte Technik vor, beide einander gegenüberliegende Seiten der Kollektorplatte 2 mit mindestens einer Sickenprägung zu versehen. Dies ist in Fig. 2 illustriert. Die Sickenprägung auf der einen Seite wird an der Sickenprägung des Elektrodenwickels 3 ausgerichtet. Die Sickenprägung auf der anderen Seite der Kollektorplatte 2 dient dazu, bei gleichzeitiger Pressung eine Berührung mit der Wand des Gehäuses 1 sicherzustellen.

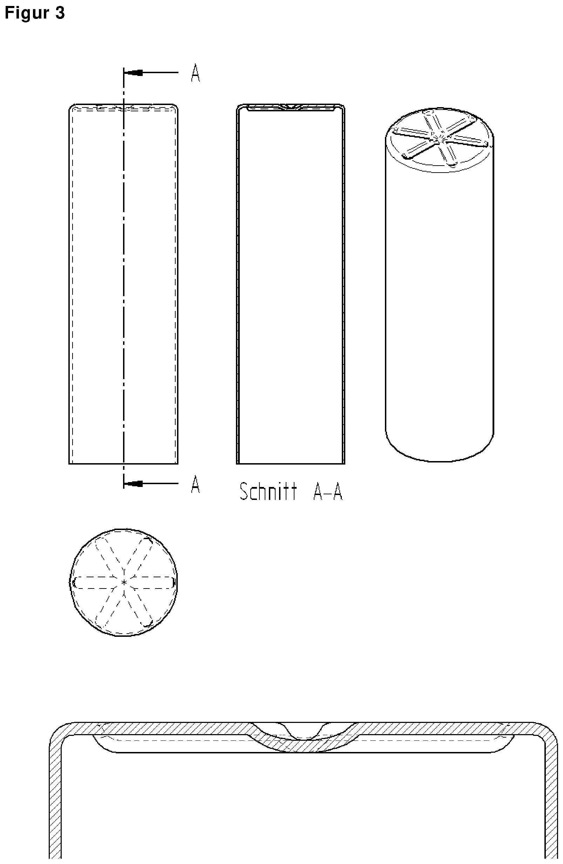

Fig. 3 zeigt eine erfindungsgemäße Ausführungsform einer elektrochemischen Zelle aus verschiedenen Perspektiven. Die Sicken in der Gehäusewand sind hier rinnenförmig ausgestaltet. Mehrere Sicken überscheiden sich in der Mitte der Fläche und bilden ein sternförmiges Muster. In der untersten Darstellung werden die Sicken in der Gehäusewand noch einmal vergrößert in einer Schnittdarstellung gezeigt.

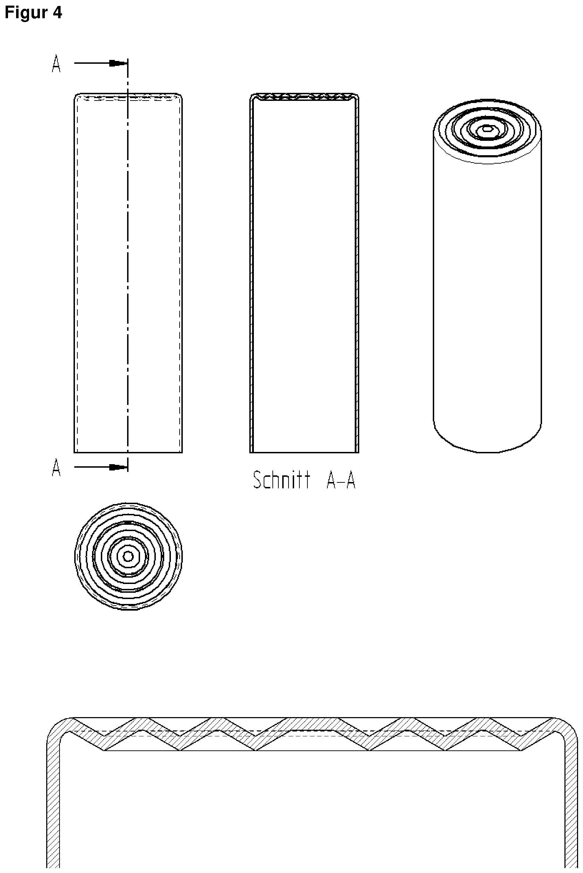

Fig. 4 zeigt eine andere erfindungsgemäße Ausführungsform einer elektrochemischen Zelle aus verschiedenen Perspektiven. Die Sicken in der Gehäusewand sind hier ebenfalls rinnenförmig ausgestaltet. Allerdings überscheiden sich die Sicken nicht. Stattdessen sind sie konzentrisch angeordnet. In der untersten Darstellung werden die Sicken in der Gehäusewand noch einmal vergrößert in einer Schnittdarstellung gezeigt.

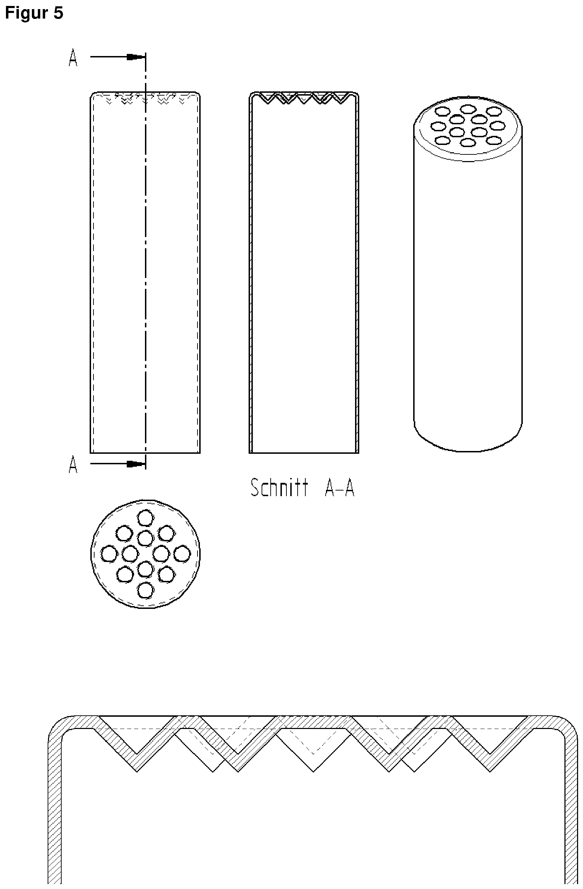

Fig. 5 zeigt eine dritte erfindungsgemäße Ausführungsform einer elektrochemischen Zelle aus verschiedenen Perspektiven. Die Sicken in der Gehäusewand sind hier noppenförmig ausgestaltet und in regelmäßigen Abständen zueinander angeordnet. In der untersten Darstellung werden die Sicken in der Gehäusewand noch einmal vergrößert in einer Schnittdarstellung gezeigt.

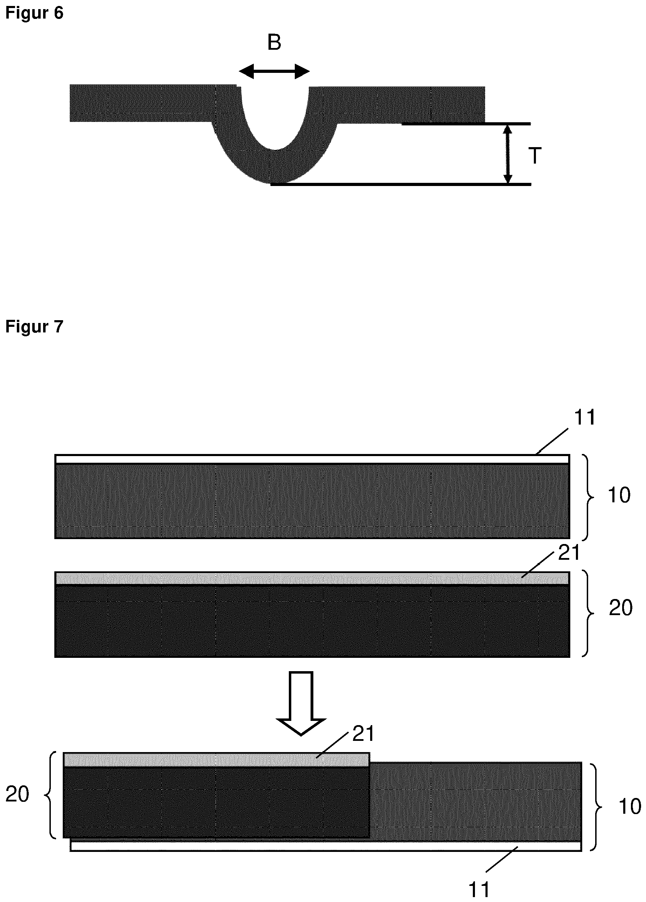

In Fig. 6 ist gezeigt, wie die Tiefe T und die Breite B einer Sicke in der Gehäusewand gemessen und festgestellt werden können. Die Tiefe T der Sicke ist in den Ausführungsformen der vorliegenden Erfindung bevorzugt zwischen 0,1 mm und 1,5 mm. Die Breite B der Sicke kann in einem großen Bereich variieren und ist im Wesentlichen von der Größe der elektrochemischen Zelle abhängig. Bei größeren Zellen (z.B. einer 26650 Zelle) sind Sickenbreiten von 2 - 3 mm denkbar. Bei kleineren elektrochemischen Zellen (z.B. 18650-Zellen) kann die Breite von 1 bis 2 mm betragen.

Fig. 7 zeigt im oberen Teil der Abbildung zwei getrennt vorliegende Elektrodenfolien. Sowohl die Kathodenfolie 10 als auch die Anodenfolie 20 weist einen unbeschichteten Anteil auf, der hier als durchgängiger Blankrand 11 bzw. 21 ausgestaltet ist. Um einen Elektrodenwickel herzustellen, werden die Elektrodenfolien mit einer dazwischenliegenden (aber nicht gezeigten) Separatorfolie übereinandergestapelt und gerollt. Dies ist im unteren Teil der Abbildung zu erkennen.

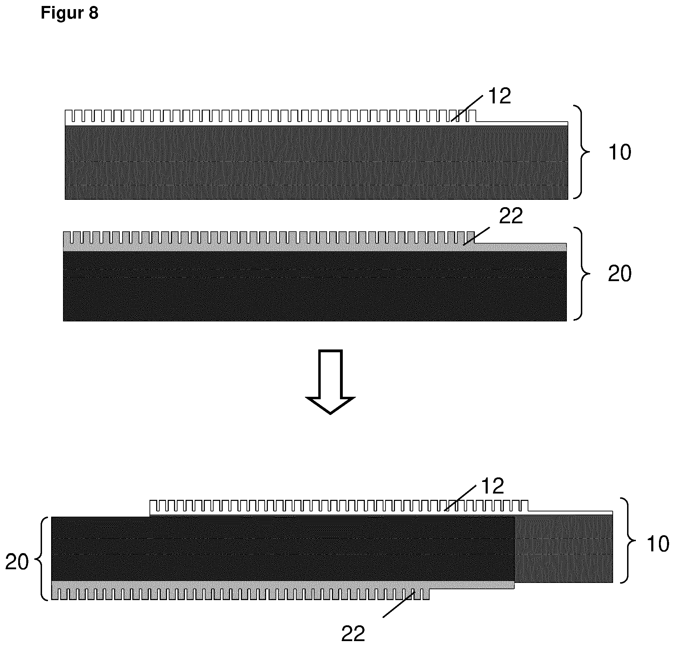

Fig. 8 zeigt ein zu Fig. 7 analoges Verfahren zur Herstellung eines Elektrodenwickels. Der einzige Unterschied zu dem Verfahren in Fig. 7 ist, dass die Elektrodenfolien 10 und 20 hier einen unbeschichteten Anteil aufweisen, der eine Vielzahl an Laschen 12 und 22 umfasst. Diese Ausbildung des unbeschichteten Anteils wird im Englischen auch "Multitab" genannt.

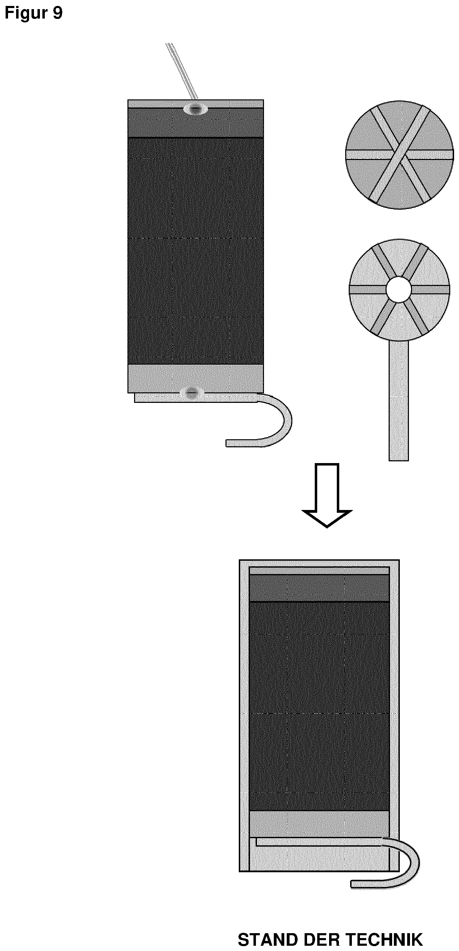

Fig. 9 zeigt eine elektrochemische Zelle nach dem Stand der Technik. Der Elektrodenwickel wird hier an zwei gegenüberliegenden Seiten mit jeweils einer Kollektorfolie verbunden und in ein Zellgehäuse eingebracht.

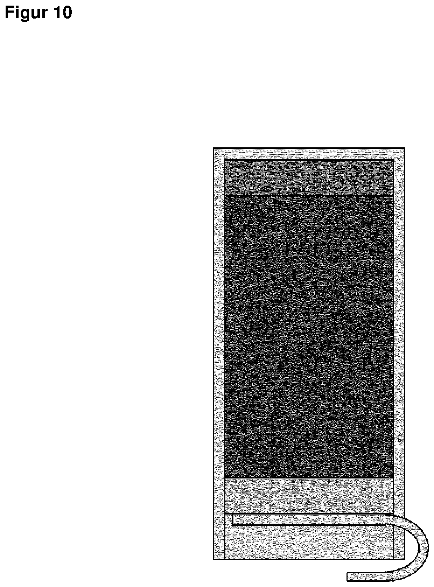

Fig. 10 zeigt im Vergleich dazu die erfindungsgemäße elektrochemische Zelle, bei der zumindest ein unbeschichteter Anteil einer Elektrodenfolie direkt mit dem Zellgehäuse verschweißt ist. Eine der zwei im Stand der Technik benutzten Kollektorplatten ist dadurch hinfällig.

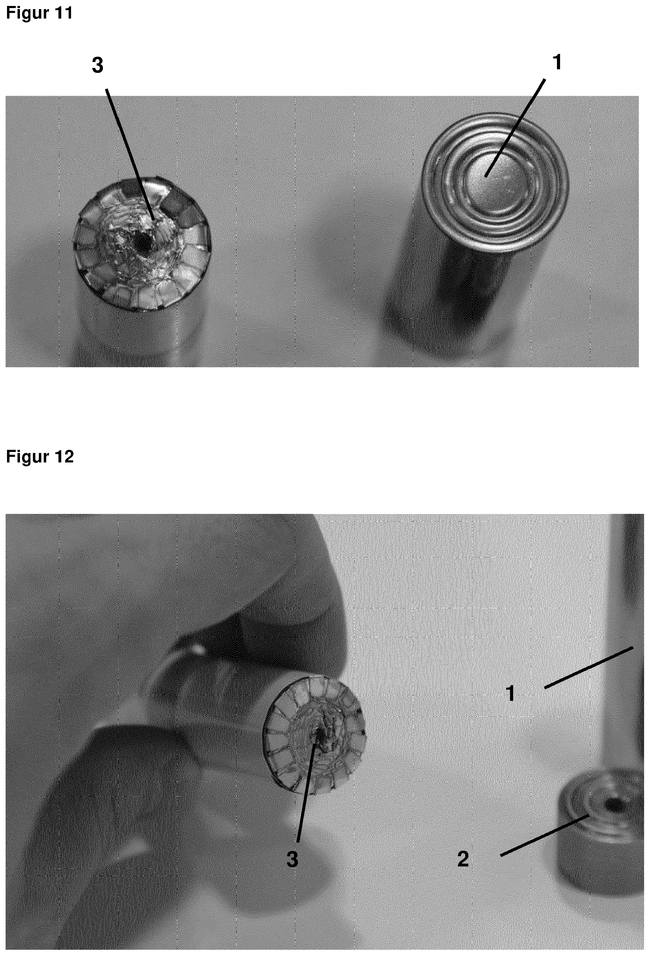

Die Fotographien in Fig. 11 und Fig. 12 zeigen die Komponenten einer erfindungsgemäßen elektrochemischen Zelle. Einerseits ist ein Gehäuse 1 zu sehen. Dieses umfasst rinnenförmige Sicken, die konzentrisch angeordnet sind. Andererseits ist ein Elektrodenwickel 3 zu sehen. In Fig. 12 befindet sich im unteren Teil zudem noch eine Kollektorplatte 2.

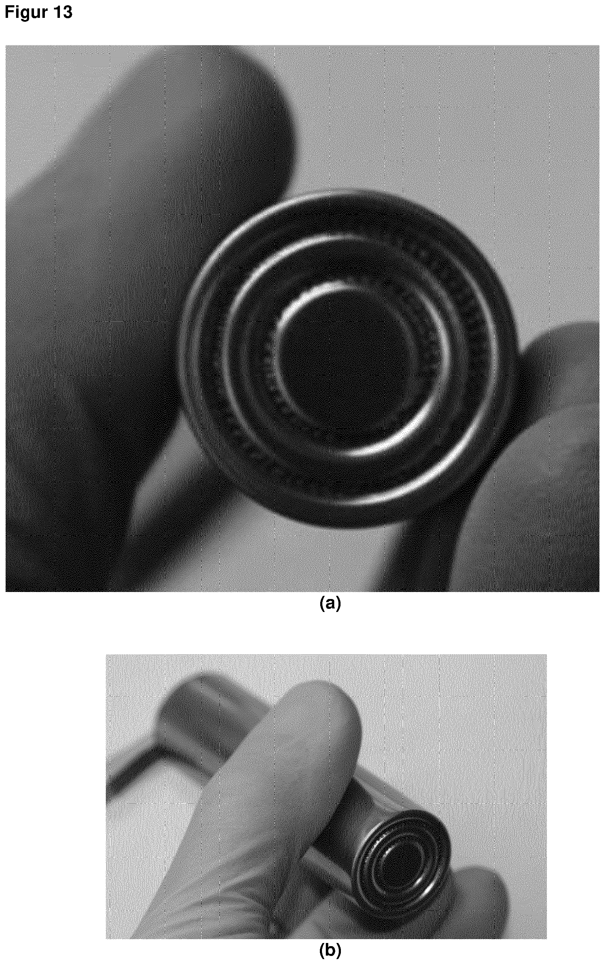

Auf den Fotographien in Fig. 13 ist eine fertiggestellte, einsatzbereite Zelle gemäß der vorliegenden Erfindung zu sehen. Das Gehäuse mit den konzentrisch angeordneten Sicken, in denen sich eine Vielzahl von Verschweißungspunkten befindet, ist in der Draufsicht auf der oberen Aufnahme in Fig. 13 (a) besonders gut zu erkennen. Fig. 13 (b) zeigt die erfindungsgemäße Zelle in einer seitlichen Ansicht. Die Schweißpunkte der gezeigten Zelle haben einen Durchmesser von ungefähr 0,3 mm. Ein präzises Schweißen wurde hier mit dem Nd:YAG-Laser der Firma Rofin ("Starweld Select"-"Microweld") bei einem gepulsten Betrieb, einer Wellenlänge von 1,06 µm, einer Leistung von 1,1 kW, einer Pulsdauer von 5,7 ms und bei Einsatz von Argon als Schutzgas erreicht.

### Versuch:

### 1) Herstellung beispielhafter elektrochemischer Zellen

### 1a) Herkömmliche Zelle "2N/1P" (1. Vergleichszelle)

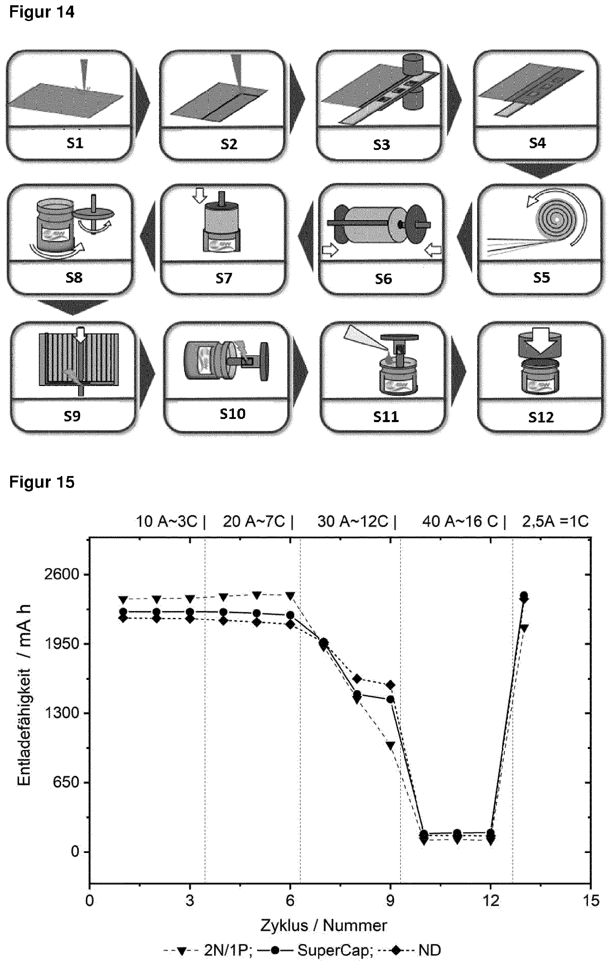

Durch einen Schneideprozess (vgl. S1, Fig. 14) werden zunächst durchgehend beschichtete Elektrodenlagen gemäß Tabelle 1 bereitgestellt. Der vordere und der hintere Bereich der Anodenlage, d.h. gegenüberliegende Randbereiche der Anodenlage, werden dann ablatiert (vgl. S2, Fig. 14), und auf diese sogenannten Blankränder werden dann mit Hilfe eines Ultraschallschweißverfahrens Tabs aufgeschweißt (vgl. S3, Fig. 14). Die Kathodenlage wird lediglich in einem mittigen Bereich ablatiert. Hier wird ein einziger Tab aufgeschweißt. Die aufgeschweißten Tabs werden mit einem Stück Kaptonband überklebt (vgl. S4, Fig. 14), um die Separatormembran, die als nächstes zwischen Kathodenlage und Anodenlage angeordnet wird, vor mechanischer Einwirkung durch scharfe Kanten am Tab zu schützen.

Nach dem Übereinanderstapeln der Kathoden- und der Anodenlage mit einer dazwischen angeordneten Separatormembran (PP/PE/PP-Membran von Celgard, verfügbar unter der Typbezeichnung 2325) und dem Wickeln des so erhaltenen Stapels (vgl. S5, Fig. 14) wird auf beide Enden des Wickels ein Isolator aufgesetzt (vgl. S6, Fig. 14). Der mit den Isolatoren bestückte Elektrodenwickel wird in ein sickenfreies Gehäuse eingebracht (vgl. S7, Fig. 14). Anschließend wird durch Rollierung des Gehäuses eine Auflagefläche für die Deckelbaugruppe gebildet (vgl. S8, Fig. 14). Die Tabs der Anode werden mit dem glatten Gehäuseboden verschweißt (vgl. S9, Fig. 14).

Der Tab der Kathode wird über eine Ultraschallverschweißung mit der Deckelbaugruppe verbunden (vgl. S10, Fig. 14). Bevor das Gehäuse verschlossen wird, wird "LP40", eine Elektrolytflüssigkeit (1-M LiPF₆-haltige Lösung von Gotion, Inc.) eingefüllt (vgl. S11 und S12, Fig. 14).

**Tabelle 1:**

| **Spezifikation** | **Kathodenlage** | **Anodenlage** |
|---|---|---|
| Aktivmaterial | NMC622* | SMG-A5** |
| Flächenspezifische Kapazität (mAh/cm²) | 2,6 | 2,94 |
| Beladung mit Aktivmaterial (mg/cm²) | 14,4 ±0,4 | 8,7 ±0,1 |
| Gesamtdicke (µm) | 125 | 135 |

| | | |
|---|---|---|
| * NMC622 ist ein Lithium-Nickel-Mangan-Cobalt-Oxid mit der Summenformel LiNi_{0,6}Mn_{0,2}Co_{0,2}O₂. ** SMG-A5 ist ein künstlich hergestelltes Graphitmaterial, das bei Hitachi erworben werden kann. | | |

### 1b) Herkömmliche Zelle "SuperCap" (2. Vergleichszelle)

Durch Schneiden und Ablation werden erneut Elektrodenlagen bereitgestellt, welche die in Tabelle 1 zusammengefassten Eigenschaften haben.

Es wird ein Stapel aus Kathodenlage und Anodenlage mit Blankrändern und einer dazwischen angeordneten Separatormembran (wieder die PP/PE/PP-Membran von Celgard, verfügbar unter der Typbezeichnung 2325) geformt. Der Stapel wird zu einem Elektrodenwickel gerollt.

Mit Hilfe einer Sickenprägemaschine werden die überstehenden Blankränder nach innen hin umgeformt. Im Anschluss daran wird der Elektrodenwickel in eine Prägemaschine gelegt und auf den Blankrändern wird eine Prägung vorgenommen. Anschließend wird beidseitig auf den Elektrodenwickel eine Kollektorplatte aufgesetzt, welche identisch zu dem Elektrodenwickel geformte Sickenprägungen aufweist. Die Kollektorplatten werden über eine Vorrichtung stark angepresst und innerhalb der Sicken mit dem Elektrodenwickel verschweißt.

Als letzter Schritt, wird der mit den Kollektorplatten versehene Elektrodenwickel mit einem Gehäuse verschweißt, das keine Sicken aufweist. Die Verschweißung zwischen Kollektorplatte und Gehäuse wird mit einem Laser oder einem Ultraschallschweißgerät erzeugt.

Die erhaltene zylindrische Zelle weist entlang der Längsachse folgenden Aufbau auf: Gehäuseboden / Kollektorplatte / Elektrodenwickel / Kollektorplatte / Deckel.

### 1c) Erfindungsgemäße Zelle "ND"

Durch Schneiden und Ablation werden erneut die Elektrodenlagen mit den Eigenschaften in Tabelle 1 bereitgestellt.

Die Elektrodenlagen werden dann modifiziert, indem die Blankränder teilweise eingeschnitten werden (mit Hilfe eines Lasers oder mit Hilfe einer Stanze) so dass die Blankränder eine Vielzahl von Laschen umfassen. Diese Ausführungsform der Ränder wird auch als "Multitab"-Design bezeichnet.

Die Elektrodenlagen und eine zwischen den Elektrodenlagen angeordnete Separatormembran werden zu einem Elektrodenwickel gerollt. Die Vielzahl an Laschen ("Multitabs") der Anodenlage und der Kathodenlage werden nach innen hin umgefaltet bzw. abgeknickt. Anschließend wird die Kathodenlage mit einer Kollektorplatte verschweißt. Die so erhaltene Anordnung aus Elektrodenwickel und einer Kollektorplatte wird in ein Zellgehäuse eingeführt, das am Gehäuseboden konzentrische nach innen geprägte, Verformungen (Sicken) aufweist. Der Elektrodenwickel wird dann mit dem Ende, das die umgefalteten Laschen der Anodenlage umfasst, gegen den Gehäuseboden gepresst. Innerhalb der Sicken wird der Gehäuseboden an mehreren Stellen mit den Laschen der Anodenlage laserverschweißt. Nach dem Laserschweißprozess werden ca. 6 mL einer Elektrolytlösung ("LP40" - eine 1-M LiPF₆-haltige Lösung von Gotion, Inc.) in das Zellgehäuse gegeben. Zuletzt wird das Zellgehäuse mit Hilfe eines Laserschweißprozesses verschlossen.

Die erhaltene zylindrische Zelle weist entlang der Längsachse folgenden Aufbau auf: Gehäuseboden / Elektrodenwickel / Kollektorplatte / Deckel.

### 2) Testen der Eigenschaften bzw. Spezifikationen der erfindungsgemäßen Zelle

Die in 1) hergestellten Zellen wurden einem Leistungstest unterzogen, bei dem die Entladefähigkeit ("discharge capacity") gemessen wurden. Die Ergebnisse sind in dem Diagramm in Fig. 15 zusammengefasst.

Der Test beinhaltet mehrere Zyklen bei insgesamt fünf verschiedenen Entladeströmen. In allen Zyklen werden die Zellen im CC/CV-Modus bei einer Temperatur von 23°C geladen. Die Zellen werden in einem ersten Stadium mit einem konstanten Strom von 1C geladen, bis sie ein Spannungslevel von 4,2 V erreicht haben (Konstantstromladebetrieb). Anschließend wird auf Konstantspannungsladebetrieb umgeschaltet und die Zellen werden so lange weiter geladen, bis der Ladestrom kleiner als C/20 ist.

Die Entladeströme werden dann auf 10 A, 20 A, 30 A, 40 A, bzw. 2,5 A eingestellt und die Zellen werden bis zu einer Restspannung von 2,0 V entladen. Beim Entladen wird eine Temperatur von 25°C nicht überschritten.

Bei Entladeströmen von 10 A, 20 A, 30 A und 40 A werden nacheinander jeweils drei Lade-/Entlade-Zyklen durchgeführt.

Hierbei zeigt sich, dass die erfindungsgemäße Zelle "ND" den Zellen "2N/1P" und "SuperCap" bei einem Entladestrom von 30 A überlegen ist, da sie dort eine höhere Entladefähigkeit zeigt.

## Patentansprüche

1. Elektrochemische Zelle umfassend ein Zellgehäuse sowie, darin enthalten, eine Elektrolytflüssigkeit und einen Elektrodenwickel,
wobei das Zellgehäuse eine Gehäusewand aufweist, in der sich zumindest bereichsweise mindestens eine Sicke befindet,
wobei der Elektrodenwickel mindestens eine Anodenlage, mindestens eine Kathodenlage und mindestens eine zwischen der Anodenlage und der Kathodenlage angeordnete Separatormembran enthält, und
wobei sowohl die Anodenlage als auch die Kathodenlage jeweils einen mit einem Aktivmaterial beschichteten Anteil und einen unbeschichteten, elektrisch leitenden Anteil umfassen,
**dadurch gekennzeichnet,**
**dass** mindestens ein unbeschichteter Anteil mit der mindestens einen Sicke der Gehäusewand verschweißt ist.

2. Elektrochemische Zelle nach Anspruch 1, wobei die Zelle eine Rundzelle ist.

3. Elektrochemische Zelle nach irgendeinem der vorangehenden Ansprüche, wobei das Zellgehäuse die Form eines Zylinders aufweist und wobei sich die mindestens eine Sicke ausschließlich in einem Bereich der Gehäusewand befindet, der eine Grundfläche des Zylinders bildet.

4. Elektrochemische Zelle nach Anspruch 3, wobei die Gehäusewand zumindest in dem Bereich, der eine Grundfläche des Zylinders bildet, eine Wandstärke von maximal 2,0 mm, bevorzugt von maximal 1,5 mm, besonders bevorzugt von maximal 0,3 mm, insbesondere von maximal 0,2 mm, aufweist.

5. Elektrochemische Zelle nach irgendeinem der vorangehenden Ansprüche, wobei, wenn lediglich eine Sicke vorhanden ist, diese spiralförmig verläuft; und,
wenn mehrere Sicken vorhanden sind, diese
i) kreisrund ausgebildet sind und voneinander durch nicht geprägte Abschnitte vollständig getrennt sind oder
ii) rillenförmig ausgebildet sind und entweder konzentrisch zueinander angeordnet sind oder einander an mindestens einer Stelle überschneiden.

6. Elektrochemische Zelle nach irgendeinem der vorangehenden Ansprüche, wobei die mindestens eine Sicke
i) eine Tiefe von mehr als 0,1 mm, bevorzugt eine Tiefe von mehr als 0,1 und weniger als 2,0 mm, besonders bevorzugt zwischen 0,15 bis 1,5 mm, und/oder
ii) einen Durchmesser von 1,0 bis 4,0 mm, bevorzugt von 1,0 bis 3,0 mm aufweist.

7. Elektrochemische Zelle nach irgendeinem der vorangehenden Ansprüche, wobei der unbeschichtete Anteil der Anodenlage und/oder der Kathodenlage eine Vielzahl von Laschen umfasst, wobei die Laschen bevorzugt alle dieselben Abmessungen aufweisen.

8. Elektrochemische Zelle nach Anspruch 7, wobei zumindest einige der Laschen abgeknickt oder gebogen vorliegen, insbesondere so, dass zwischen einigen der Laschen ein Kontakt entsteht.

9. Elektrochemische Zelle nach irgendeinem der vorangehenden Ansprüche,
wobei die Anodenlage eine Aluminiumfolie und die Kathodenlage eine Kupferfolie umfasst,
und wobei sowohl die Aluminiumfolie als auch die Kupferfolie bevorzugt eine Dicke von 5 bis 25 µm aufweist.

10. Elektrochemische Zelle nach irgendeinem der vorangehenden Ansprüche, wobei das Aktivmaterial ausgewählt ist aus Graphit oder einem Material aus der Gruppe bestehend aus Lithiumkobaltoxid (LiCoO₂), Lithiummanganoxid (LiMnO₂), Lithiumeisenphosphat (LiFePO₄), Lithium-Nickel-Mangan-Kobalt Oxid (NMC), Lithium-Nickel-Kobalt-Aluminium Oxid (NCA) und Mischungen hiervon.

11. Elektrochemische Zelle nach irgendeinem der vorangehenden Ansprüche, wobei der unbeschichtete Anteil der Anodenlage an einem ersten Ende der Längsachse des Elektrodenwickels angeordnet ist, während der unbeschichtete Anteil der Kathodenlage an dem anderen Ende, das dem ersten Ende gegenüberliegt, angeordnet ist.

12. Elektrochemische Zelle nach irgendeinem der vorangehenden Ansprüche,
wobei entweder der unbeschichtete Anteil der Anodenlage oder der unbeschichtete Anteil der Kathodenlage mit der mindestens einen Sicke der Gehäusewand verschweißt ist, und
wobei der jeweils andere unbeschichtete Anteil mit einer Kollektorplatte verschweißt ist.

13. Verfahren zur Herstellung einer elektrochemischen Zelle, bei dem
a) eine Anordnung von mindestens einer Anodenlage, mindestens einer Kathodenlage und mindestens einer zwischen der Anodenlage und der Kathodenlage angeordneten Separatormembran zu einem Elektrodenwickel gerollt wird;
wobei sowohl die Anodenlage als auch die Kathodenlage jeweils einen mit einem Aktivmaterial beschichteten Anteil und einen unbeschichteten, elektrisch leitenden Anteil umfassen,
b) der Elektrodenwickel in ein Zellgehäuse eingeführt wird, in dessen Gehäusewand sich zumindest bereichsweise mindestens eine Sicke befindet;
c) mindestens ein unbeschichteter Anteil mit der mindestens einen Sicke der Gehäusewand in einem Laserschweißprozess verbunden wird; und
d) eine Elektrolytflüssigkeit in das Zellgehäuses gefüllt wird, bevor das Zellgehäuse verschlossen wird.

14. Verfahren nach Anspruch 13, wobei, wenn der unbeschichtete Anteil in Schritt a) ein durchgängiger Streifen mit konstanter Breite am Rand der Kathodenlage oder der Anodenlage ist, noch Vertiefungen in den unbeschichteten Anteil eingebracht werden, so dass eine Vielzahl von Laschen entsteht, bevor der Elektrodenwickel in das Zellgehäuse eingeführt wird, wobei die Vertiefungen bevorzugt mit Hilfe einer Sickenprägemaschine erzeugt werden.
